# EUROPEAN PATENT SPECIFICATION

(11) **EP 0 927 593 B1**
(45) Date of publication and mention of the grant of the patent: **02.05.2003**
(21) Application number: 98660143.3
(22) Date of filing: 17.12.1998
(51) Int. Cl.: B23K 1/00

(54) **Method and apparatus for positioning solder or braze material on the fins**
Verfahren und Vorrichtung zum Positionieren von Lötmaterial auf den Rippen
Méthode et appareil pour déposer de la brasure sur des ailettes

(30) Priority: 22.12.1997 FI 974606
(43) Date of publication of application: 07.07.1999
(73) Proprietor: Outokumpu Oyj, 02200 Espoo (FI)
(72) Inventor: Tapper, Leif, Torgesta, 745 95 Enköpning (SE); Falkenö, Anders, 722 44 Västeras (SE); Svanberg, Kurt, 612 36 Finspang (SE)
(74) Representative: Aarnio, Hannu Aatto Aulis

(56) References cited:
- EP-A- 0 217 685
- US-A- 3 139 679
- PATENT ABSTRACTS OF JAPAN vol. 10, no. 55 (M-458) [2112], 5 March 1986 & JP 60 203358 A (MITSUBISHI JUKOGYO K.K.), 14 October 1985

## Description

The invention relates to a method for positioning solder or braze material on the fins to be used in a heat exchanger, as a radiator for a vehicle, so that a significant amount of braze material is saved.

A radiator to be used in a vehicle normally consists of a number of flat oval tubes in one or several rows. Between these rows of the tubes there are fins, normally made of a corrugated thin metal strip. In order to allow heat to be conducted from the tube to the fin and to form a solid core, there must be a strong metallic bond between the tube and the fin. This is normally done by a braze or a solder material.

In order to create a strong metallic bond solder or braze material has first to be brought into a contact with the tube and/or the fin. Several methods have been used for this purpose. In one of these methods the solder or braze material is applied to the tube wall in the tube mill. In this method the tube to be treated passes a pot with molten solder or braze material and gets a thin layer of solder or braze material all around the tube.

The solder or braze material can also be treated so that a thin layer of solder or braze material as clad material is rolled together with the tube material. This kind of a layer on the tube is shown for instance in the JP patent application 2-84261. The thin layer can also be done on the strip used as a fin material as shown in the JP patent application 2-84258. It is also used a method where the solder or braze material in powder form is mixed with a carrier material and sprayed or rolled on the flat sides of the tubes.

The methods described use much more solder or braze material than needed because as illustrated in the JP patent applications 2-84261 and 2-84258 there are solder and braze material also outside the joint points between the tube and the fin. It is important to control the amount of solder or braze material so that there is not too much that material. It is also possible that a great amount of solder or braze material creates a significant risk for dissolving the base material during the brazing cycle.

The JP patent application 6-170520 describes a heat exchanger and its production wherein the fins are provided with a brazing composition of Al-Si alloy powder only near the curved parts by using a binder resin and tubes and subjecting the assembly to flux brazing. In this JP patent application it is not described how the brazing composition is positioned onto the fin surface.

The object of the present invention is to eliminate some drawbacks of the prior art and to achieve an improved method which is more reliable for positioning solder or braze material on the fins so that the fins are coated with solder or braze material essentially only in the positions of the fins which will have a contact with the tubes after soldering or brazing. The essential novel features of the invention are apparent from the appended claims.

According to the invention a fin material made of a corrugated strip is moved in the vicinity of a cladding device so that when the fin material passes the cladding device the fin material is cladded at least in one side of the fin material essentially only at the curved parts of the fin material. When passing the cladding device the fin material is advantageously so supported that the curved parts of the fin material are separated from each other in order that the fin material has an essentially even layer of solder or braze material essentially on the curved parts.

When the fin material is used for a heat exchanger as a radiator where the fin material is arranged between tubes so that the contacting points of the fin material to the tubes are essentially in the curved parts of the fin material it is advantageous to clad the curved parts essentially simultaneously on both sides of the fin material. The cladding device is then positioned so that the members which bring the cladding material to the connection with the fin material, are placed on the opposite direction to the fin material. The control members for bringing the clad material to the connection with the fin material can be positioned so that the members are placed opposite to each other or the control members can be positioned so that there is a distance in the moving direction of the fin material between the control members.

The passing of the cladding device for the fin material according to the invention can be carried out essentially vertically or essentially horizontally or in any direction between the vertical and the horizontal position. However, when it is desired to clad the curved parts of the fin material on the both sides, a vertical position is preferred. Then an essentially similar connection between the fin material and the clad material is achieved.

The connection between the fin material and the desired solder or braze material according to the invention is advantageously created by a mechanical contact. The control member for bringing the clad material to the connection with the fin material is positioned so that the fin material will contact the clad material on the surface of the control member when the fin material passes the control member. It is also possible to blast the solder or braze material onto the surface of the fin material when the fin material passes the control member. Thus any mechanical contact between the fin material and solder or braze material is optional.

In order to create a mechanical contact between fin material and the solder or braze material, it is advantageous to use as the control member for bringing the clad material to the connection with the fin material for instance a pairs of rolls which are covered with solder or braze material. The rolls are advantageously positioned on both sides of the fin material so that the fin material is led through the opening between the rolls in a vertical direction. Then an essentially similar and essentially simultaneous contact is created in the curved parts in both sides of the fin material. On the basis of the contact between the fin material and solder or braze material the fin material is clad with solder or braze material essentially only on the curved parts of the fin material. Depending on solder or braze material, solder or braze material is dried and/or cooled after solder or braze material was brought into a contact with the fin material. Thereafter, the fin material clad with solder or braze material according to the invention is ready to the soldering or brazing process itself.

The fin material used in the method and apparatus of the invention is preferably copper or aluminium. The solder or braze material can be a material suitable for soldering or brazing of these fin metals to the tubes made of metals as brass or aluminium for heat exchangers as radiators to be used for instance in vehicles.

When using the method and the apparatus of the invention, the saving of solder or braze material is as high as 75 % compared with known methods wherein tubes and/or fins are cladded in the whole length with solder or braze material.

The invention is described in more detail with reference to the appended drawings, where
Fig. 1 is a side-view illustration of a preferred embodiment of the invention,
Fig. 2 illustrates the fin with braze material as a result using the embodiment of Fig. 1.

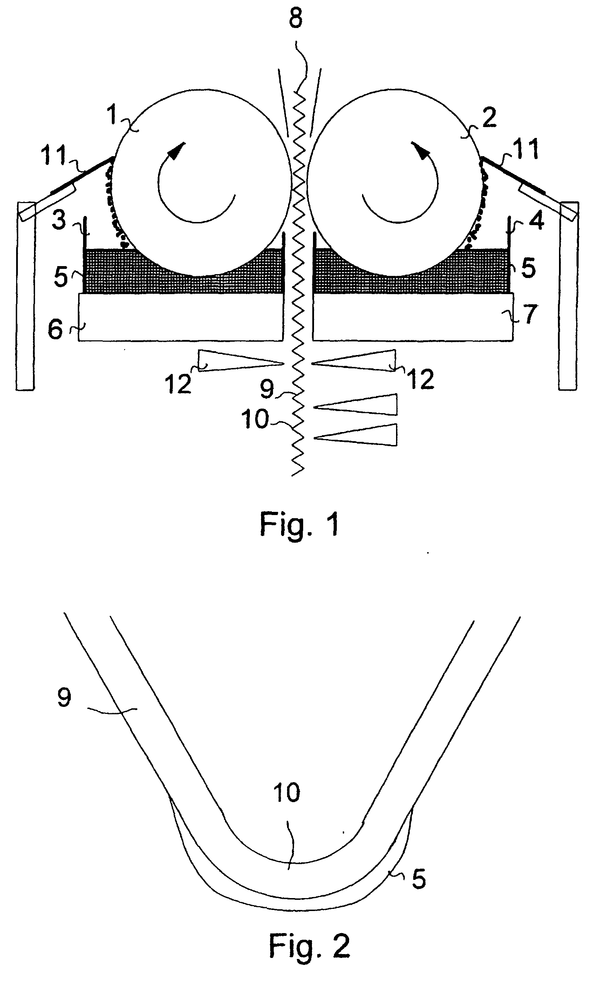

In accordance with the Figs. 1 and 2 two rolls 1 and 2 are mounted above containers 3 and 4 respectively. The containers 3 and 4 are partly filled with brazing paste 5 which can be heated, if needed, by electric heaters 6 and 7 placed below the containers 3 and 4 respectively. The rolls 1 and 2 are so positioned that the rolls 1 and 2 are partly immersed in brazing paste 5. Further, the rolls 1 and 2 are positioned so that the opening between the rolls 1 and 2 is essentially as broad as the height of the corrugated strip 8 to be used as fin material when the strip 8 is so corrugated that the parts 9 of the corrugated strip 8 between the curved parts 10 will have a contact to each other.

When using the method of the invention the fin material 8, a corrugated strip, is fed in essentially vertical direction downwards to the opening between the rolls 1 and 2 so that the curved parts 10 of the fin material 8 are separated from each other. Simultaneously with the feeding of the fin material 8 the rolls 1 and 2 convey brazing paste 5 on their surface. In order to make an essentially even layer of brazing paste 5 on the surface or the rolls 1 and 2, scrapers 11 are mounted on the rolls 1 and 2 to remove surplus of brazing paste 5. The rolls 1 and 2 are advantageously heated in order to maintain brazing paste 5 in a desired temperature at the range of 30 to 150 °C, preferably 100 to 110 °C. Owing to the adjustment of the opening between the rolls 1 and 2 when the fin material 8 passes the opening, it is created a mechanical contact between the fin material 8 and brazing paste 5. Thus the fin material 8 is cladded with braze material 5 on the curved parts 10. The brazing paste 11 on the fin material 8 is then cooled by blasting gas through nozzles 12 towards the fin material 8 with brazing paste 5.

The fin material 8 with brazing paste 5 on the curved parts 10 is then ready for manufacturing a radiator by jointing the fin material 8 with tubes in a brazing process.

## Claims

1. Method for positioning solder or braze material on the fin material to be used in a heat exchanger, as a radiator for vehicle, in which method the fin material, as a corrugated strip, is partly covered with solder or braze material and the fᵢₙ material (8) is transferred to the vicinity of a cladding device (1,2) so that when the fin material (8) is passed by the cladding device (1,2), the fin material (8) is cladded by solder or braze material (11) at least in one side of the fin material (8) essentially at the curved parts (10) of the fin material (8), **characterized in that** the cladding device (1,2) has a pair of rolls (1,2) positioned to each other so that the rolls (1,2) are partly immersed in containers (3,4) for solder or brazing material (5) and solder or braze material is conducted from the containers (3,4) to the cladding on the heated rolls (1,2) in order to maintain solder or braze material (5) at a desired temperature.

2. Method according to claim 1, **characterized in that** the fin material (8) is passed over the cladding device (1,2) in essentially vertical direction.

3. Method according to claim 1, **characterized in that** the fin material (8) is passed over the cladding device (1,2) in essentially horizontal direction.

4. Method according to claim 1, **characterized in that** the fin material (8) is passed over the cladding device (1,2) in a direction between the vertical and horizontal position.

5. Method according to any claims 1 to 4, **characterized in that** in passing between the fin material (8) and the cladding device (1,2) a mechanical contact is created.

6. Method according to any of the preceding claims, **characterized in that** the rolls (1,2) are in the temperature range of 30 to 150 °C.

7. Method according to claim 6, **characterized in that** the rolls (1,2) are in the temperature range of 100 to 110 °C.

## Patentansprüche

1. Verfahren zum Anbringen von Löt- oder Hartlötmittel auf Lamellenmaterial, das in einem Wärmetauscher verwendet wird, zum Beispiel in einem Kühler für Fahrzeuge, wobei das Lamellenmaterial, das die Form eines gerippten Streifens hat, teilweise mit dem Löt- oder Hartlötmittel überzogen wird und das Lamellenmaterial (8) einer Überzugsvorrichtung (1,2) zugeführt wird, so dass wenn das Lamellenmaterial (8) durch die Überzugsvorrichtung (1,2) läuft, das Lamellenmaterial (8) mit Löt- oder Hartlötmittel (11) zumindest von einer Seite des Lamellenmaterials (8) überzogen wird, und zwar besonders an den gebogenen Teilen (10) des Lamellenmaterials (8), **gekennzeichnet dadurch, dass** die Überzugsvorrichtung (1,2) über ein Paar von Walzen (1,2) verfügt, die in der Weise zueinander positioniert sind, dass die Walzen (1,2) teilweise in Behälter (3,4) für das Löt- oder Hartlötmittel (5) eingetaucht sind und dass das Löt- oder Hartlötmittel aus den Behältern (3,4) zum Überziehen auf die beheizten Walzen (1,2) geleitet wird, damit das Löt- oder Hartlötmittel (5) die gewünschte Temperatur beibehält.

2. Verfahren gemäß Patentanspruch 1, **gekennzeichnet dadurch, dass** das Lamellenmaterial (8) über die Überzugsvorrichtung (1,2) in vorwiegend vertikaler Richtung geführt wird.

3. Verfahren gemäß Patentanspruch 1, **gekennzeichnet dadurch, dass** das Lamellenmaterial (8) über die Überzugsvorrichtung (1,2) in vorwiegend horizontaler Richtung geführt wird.

4. Verfahren gemäß Patentanspruch 1, **gekennzeichnet dadurch, dass** das Lamellenmaterial (8) über die Überzugsvorrichtung (1,2) in einer Richtung zwischen der vertikalen und der horizontalen Position geführt wird.

5. Verfahren gemäß allen obigen Patentansprüchen 1 bis 4, **gekennzeichnet dadurch, dass** beim Durchgang des Lamellenmaterials durch die Überzugsvorrichtung (1,2) ein mechanischer Kontakt entsteht.

6. Verfahren gemäß allen obigen Patentansprüchen, **gekennzeichnet dadurch, dass** die Walzen (1,2) eine Temperatur im Bereich zwischen 30 und 150 °C haben.

7. Verfahren gemäß dem Patentanspruch 6, **gekennzeichnet dadurch, dass** die Walzen (1,2) eine Temperatur im Bereich zwischen 100 und 110 °C haben.

## Revendications

1. Méthode permettant d'appliquer une brasure tendre ou forte sur une ailette à utiliser dans un échangeur thermique, tel qu'un radiateur de voiture, selon laquelle l'ailette (8), se présentant sous la forme d'une bande rugueuse, est partiellement recouverte d'une brasure tendre ou forte et est transférée à proximité d'un dispositif de placage (1,2) de sorte que lorsque l'ailette (8) passe dans le dispositif de placage (1,2), elle est revêtue d'une brasure tendre ou forte (11) sur au moins un côté, particulièrement sur les parties courbées (10) de l'ailette (8), **caractérisée par le fait que** le dispositif de placage (1,2) comporte deux cylindres (1,2) positionnés de façon à être partiellement immergés dans des conteneurs (3,4) contenant la brasure tendre ou forte (5) et cette brasure est transférée des conteneurs (3,4) vers le dispositif de placage sur les cylindres chauffés (1,2) afin de maintenir la brasure (5) à la température souhaitée.

2. Méthode selon la revendication 1, **caractérisée par le fait que** l'ailette (8) passe dans le dispositif de placage (1,2) en position verticale.

3. Méthode selon la revendication 1, **caractérisée par le fait que** l'ailette (8) passe dans le dispositif de placage (1,2) en position horizontale.

4. Méthode selon la revendication 1, **caractérisée par le fait que** l'ailette (8) passe dans le dispositif de placage (1,2) dans une position située entre la position verticale et horizontale.

5. Méthode selon les revendications 1 à 4, **caractérisée par le fait que** lors du passage de l'ailette (8) dans le dispositif de placage (1,2) un contact mécanique est créé.

6. Méthode selon les revendications précédentes, **caractérisée par le fait que** la température des cylindres (1,2) se situe entre 30 et 150 °C.

7. Méthode selon la revendication 6, **caractérisée par le fait que** la température des cylindres (1,2) se situe entre 100 et 110 °C.
